# EUROPEAN PATENT APPLICATION

(11) **EP 4 782 371 A1**
(43) Date of publication of application: **29.07.2026**
(21) Application number: 24871502.1
(22) Date of filing: 31.07.2024
(51) Int. Cl.: B65G 1/14

(54) **HOLDING DEVICE**

(30) Priority: 29.09.2023 JP 2023169634
(71) Applicant: Daifuku Co., Ltd., Osaka-shi, Osaka 555-0012 (JP)
(72) Inventor: KAWAI Yuto, Gamo-gun, Shiga 529-1692 (JP); TSUTSUI Masaki, Gamo-gun, Shiga 529-1692 (JP); YOSHINAGA Kazuharu, Gamo-gun, Shiga 529-1692 (JP); TAKAGI Daiki, Gamo-gun, Shiga 529-1692 (JP)
(74) Representative: Grosse, Felix Christopher
(86) International application number: PCT/JP2024/027301
(87) International publication number: WO 2025/069700

(57) **Abstract**

A holding device (100) for holding transport vehicles includes a plurality of holding units (1) including a first holding unit (1) and a second holding unit (1). Each holding unit (1) includes a mount (12) on which a plurality of transport vehicles (8) are arranged, and N posts (11) attached to the mount (12) and protruding at least downward from the mount (12). Each post (11) of the first holding unit (1) is vertically attachable to and detachable from a corresponding post (11) of the second holding unit (1). The holding units (1) are stacked by connecting each of the posts (11) of the first holding unit (1) to the corresponding post (11) of the second holding unit (1). The stacked holding units (1) are disassembled by disconnecting each of the posts (11) of the first holding unit (1) from the corresponding post (11) of the second holding unit (1).

## Description

### FIELD

The present invention relates to a holding device that collectively holds multiple transport vehicles each including a body and wheels mounted on the body.

### BACKGROUND

Article transport facilities such as distribution warehouses have recently automated article transport systems. In such article transport facilities, for example, transport vehicles (10) of the type described in Japanese Unexamined Patent Application Publication No. 2022-050240 are widely used. Such transport vehicles (10) autonomously travel along a travel floor to transport articles.

### CITATION LIST

### PATENT LITERATURE

Patent Literature 1: Japanese Unexamined Patent Application Publication No. 2022-050240

### BRIEF SUMMARY

### TECHNICAL PROBLEM

Facilities using transport vehicles as described in the above literature can have excess transport vehicles (idle transport vehicles) during off-peak periods with a moderate operating status. In this case, a part of the travel floor may be defined as a waiting area that holds such idle transport vehicles. However, the part of the travel floor is subjected to travel restrictions, which may interfere with the mobility of active transport vehicles. Although idle transport vehicles are to be removed from the travel floor and stored, sufficient space may not be available for storing such transport vehicles. When sufficient space is available, stored wheeled transport vehicles are to be held securely to prevent accidental movement caused by, for example, vibrations.

Under such circumstances, holding devices for easily storing idle transport vehicles in response to fluctuations in the number of active transport vehicles and holding the stored transport vehicles securely are awaited.

### SOLUTION TO PROBLEM

In response to the above, a holding device collectively holds a plurality of transport vehicles each including a body and a wheel mounted on the body. The holding device includes a plurality of holding units that hold the plurality of transport vehicles. The plurality of holding units include a first holding unit and a second holding unit. The plurality of holding units are stackable vertically. Each of the plurality of holding units includes a mount on which the plurality of transport vehicles are arranged, and N posts attached to the mount and protruding at least downward from the mount, where N is an integer greater than or equal to 3. The mount supports the body from below with the wheel lifted in an off-ground state. Each of the N posts of the first holding unit is vertically attachable to and detachable from a corresponding post of the second holding unit. The plurality of holding units are stacked by connecting each of the N posts of the first holding unit to the corresponding post of the second holding unit. The plurality of stacked holding units are disassembled by disconnecting each of the N posts of the first holding unit from the corresponding post of the second holding unit.

This structure allows a single holding unit to hold multiple transport vehicles. A holding unit can be stacked on another holding unit to increase the number of transport vehicles that can be held. Multiple stacked holding units can be disassembled to reduce the number of transport vehicles that can be held. The holding unit holds a transport vehicle on the mount. The mount supports the body of the transport vehicle from below with the wheel in the transport vehicle lifted in an off-ground state. This structure avoids rolling of the wheel on the mount. This allows the transport vehicle to be held stably. As described above, this structure allows idle transport vehicles to be easily stored in response to fluctuations in the number of active transport vehicles and the stored transport vehicles to be held securely. This structure can also hold multiple transport vehicles on each of the stackable holding units securely, thus allowing the holding device to be suitably used when a large number of transport vehicles are transported.

Further features and advantages of the technique according to the present disclosure will be apparent from exemplary and nonlimiting embodiments described below with reference to the drawings.

### BRIEF DESCRIPTION OF DRAWINGS

FIG. 1 is a plan view of a first floor and a second floor in an article sorting facility.
FIG. 2 is a diagram illustrating the travel operation of a transport vehicle.
FIG. 3 is a plan view of a holding device.
FIG. 4 is a front view of the holding device.
FIG. 5 is a cross-sectional view of area V in FIG. 4.
FIG. 6 is a cross-sectional view of area VI in FIG. 4.
FIG. 7 is a diagram illustrating stacking multiple holding units.
FIG. 8 is a diagram illustrating feeding a transport vehicle held by a holding unit to a floor.
FIG. 9 is a diagram illustrating connecting a holding unit to a support unit.
FIG. 10 is a diagram showing a sheet winding operation.

### DETAILED DESCRIPTION

A holding device holds multiple transport vehicles collectively. Such transport vehicles are used in article transport facilities in which articles are transported and stored. In article transport facilities, excess transport vehicles (idle transport vehicles) may occur during off-peak periods in which the operating status is moderate. A holding device according to one or more embodiments of the present disclosure is used to, for example, hold the above idle transport vehicles. The holding device is also used to move multiple transport vehicles collectively between different facilities or different departments that use the transport vehicles.

The structure of transport vehicles to be held by the holding device and an article transport facility using the transport vehicles will be described first by way of example.

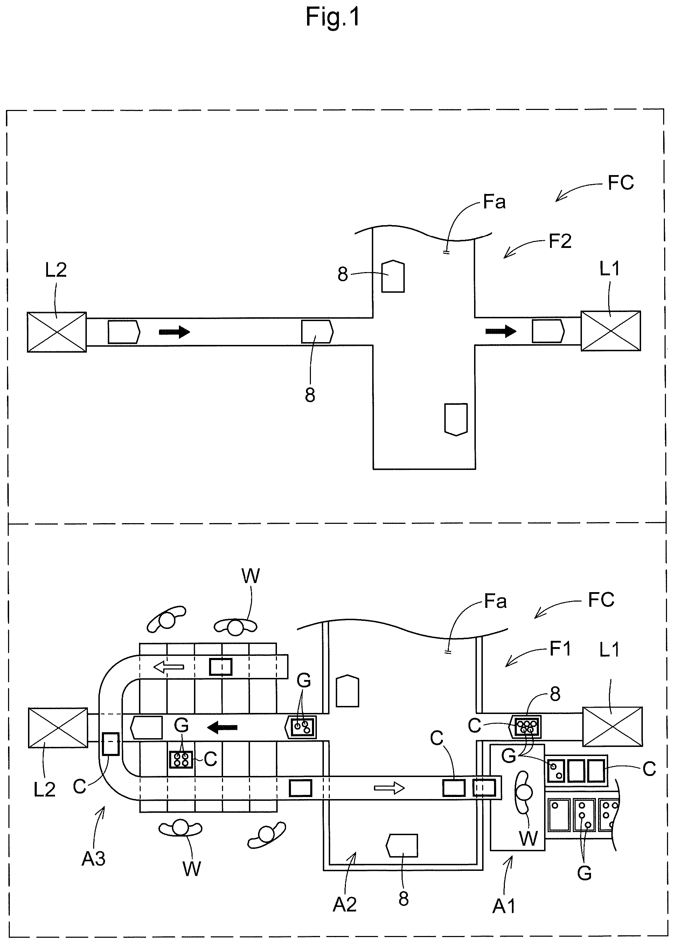

As shown in FIG. 1, an article transport facility FC includes multiple floors arranged vertically and multiple transport vehicles 8 that travel along the floors. FIG. 1 shows a two-level article transport facility FC including a first floor F1 and a second floor F2. The first floor F1 is the first level, and the second floor F2 is the second level. In this example, the article transport facility FC includes a first lifter L1 and a second lifter L2 that lift and lower the transport vehicles 8 between the first floor F1 and the second floor F2. Hereafter, the first floor F1 and the second floor F2 may be simply and collectively referred to as the floors.

In the present embodiment, the first floor F1 includes a transfer area A1 for transferring articles G to the transport vehicles 8, a receiving area A3 for receiving the articles G that have been transported by the transport vehicles 8, and a connection area A2 connecting the transfer area A1 and the receiving area A3.

The transfer area A1 receives articles G to be transported by the transport vehicles 8. The articles G are transferred to the transport vehicles 8 in the transfer area A1. In the illustrated example, containers C each containing one or more articles G are transferred to the transport vehicles 8. The articles G are transferred to the transport vehicles 8 by an operator W or a robot.

The transport vehicles 8 transport the articles G received in the transfer area A1 to the receiving area A3 through the connection area A2.

The receiving area A3 receives the articles G transported by the transport vehicles 8. The received articles G are sorted. The sorting is based on predetermined order information. For example, the order information includes various types of information such as customer information, shipping destination information, and article type information. The articles G are sorted by an operator W or a robot.

The transport vehicles 8 travel on an aisle in the receiving area A3 and feed their held articles G (or the container C containing the articles G) to a conveyor or a chute adjacent to the aisle. The fed articles G are sorted by the operator W or the robot as described above.

For example, the sorting involves removing the articles G from the container C. This removal produces an empty container C. The empty container C produced in the receiving area A3 is transferred on a dedicated conveyor to the transfer area A1 and reused in the transfer area A1.

After feeding the articles G in the receiving area A3, the transport vehicles 8 ride the second lifter L2 and move to the second floor F2. The transport vehicles 8 then travel along the second floor F2, ride the first lifter L1 installed at the end of the floor opposite from the second lifter L2, and return to the first floor F1. The returned transport vehicles 8 transport articles G between the transfer area A1 and the receiving area A3 as described above.

The transport vehicles 8 can travel along travel surfaces Fa on the first floor F1 and the second floor F2.

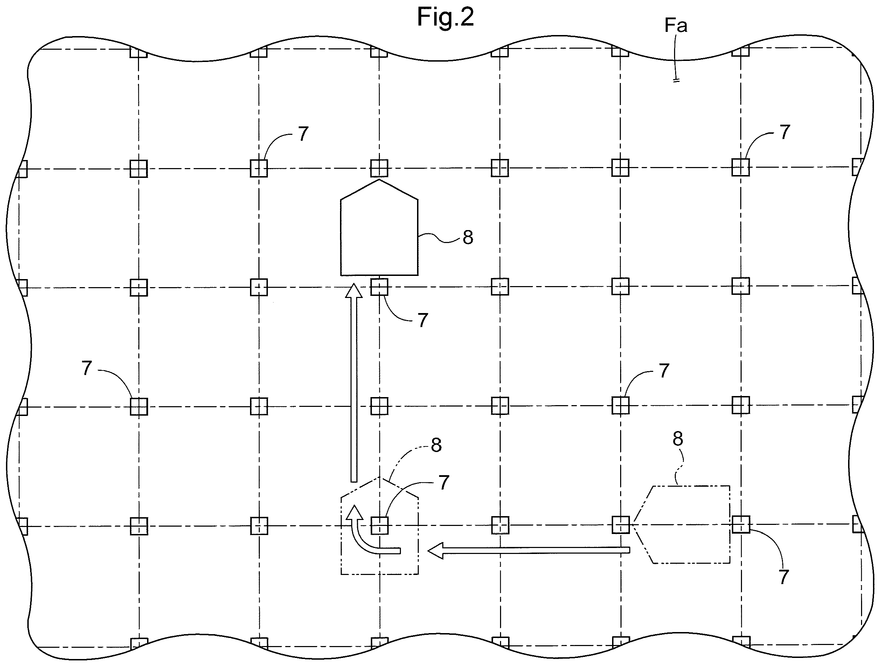

As shown in FIG. 2, the travel surface Fa includes virtual travel paths in the form of a grid. In the present embodiment, the transport vehicle 8 travels in a straight line and changes the direction by turning about its vertical axis at the position. The transport vehicle 8 can combine straight-line travel and a turn to travel on any of the travel paths defined on the travel surface Fa.

In the present embodiment, position information storages 7 are installed at multiple sites across the travel surface Fa and store position information about the respective sites. In this example, the virtual travel paths are defined to connect the multiple position information storages 7. The transport vehicle 8 travels while sequentially detecting the multiple position information storages 7 installed on the travel paths. The position of each position information storage 7 is defined as a position at which the transport vehicle 8 turns. The transport vehicle 8 changes the direction as appropriate by turning at the position of the position information storage 7. The position information storage 7 may be a one-dimensional code or a two-dimensional code storing identification information or may be a radio frequency identification (RFID) tag storing identification information.

In this manner, the transport vehicles 8 may be used in the article transport facility FC. As described above, excess transport vehicles 8 (idle transport vehicles 8) may occur based on the operating status of the article transport facility FC. The idle transport vehicles 8 may be held on standby in an area of the floors. In this case, however, the area of the floors is subjected to travel restrictions, which may interfere with the mobility of active transport vehicles 8.

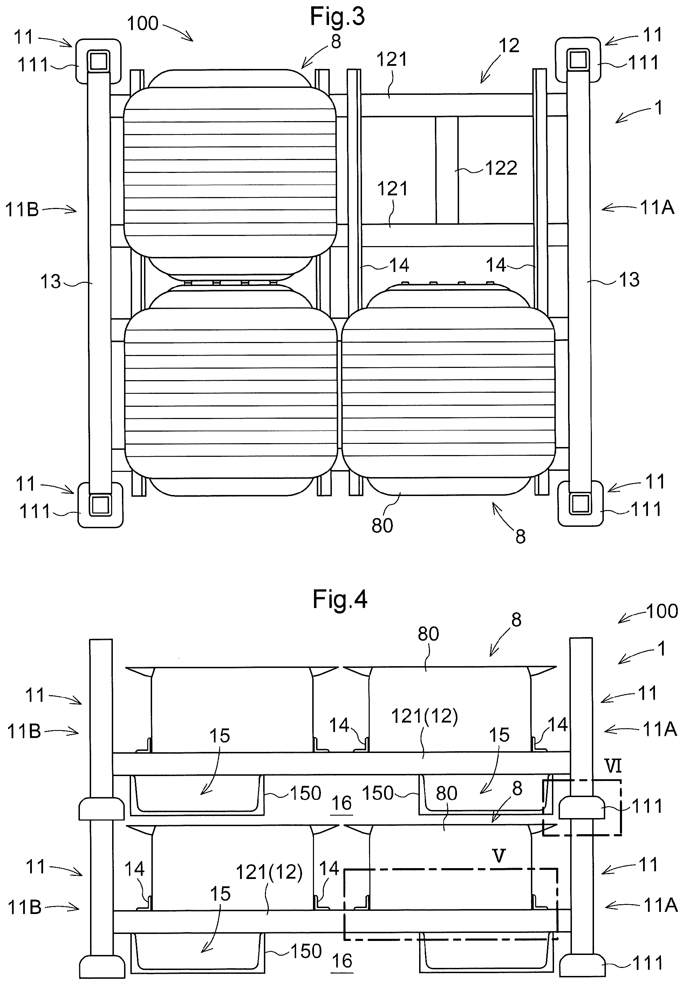

A holding device 100 is thus used as shown in FIGs. 3 and 4. The holding device 100 can hold multiple idle transport vehicles 8 collectively as described above. This improves the mobility of active transport vehicles 8 compared with when idle transport vehicles 8 are held on standby in an area of the floors, allowing the floors to be used efficiently. The holding device 100 will now be described in detail.

As shown in FIGs. 3 and 4, the holding device 100 collectively holds multiple transport vehicles 8 each including a body 80 and wheels 81 mounted on the body 80.

The holding device 100 includes multiple holding units 1 that hold multiple transport vehicles 8. FIG. 4 shows two holding units 1. Each holding unit 1 can hold multiple transport vehicles 8.

The multiple holding units 1 are stackable in the vertical direction. FIG. 4 shows the two stacked holding units 1. However, three or more holding units 1 may be stacked. More specifically, the number of stackable holding units 1 can be determined based on, for example, the strength of the holding units 1 or the balance when transport vehicles 8 are held.

The holding unit 1 includes a mount 12 on which multiple transport vehicles 8 are arranged and N posts 11 (N is an integer greater than or equal to 3) attached to the mount 12 and protruding at least downward from the mount 12.

In the present embodiment, the mount 12 includes multiple crossbars 121 and a crossbar connector 122 connecting adjacent crossbars 121. In this example, the crossbars 121 and the crossbar connector 122 are elongated members. The multiple crossbars 121 and one or more crossbar connectors 122 connecting the multiple crossbars 121 extend in directions intersecting with each other as viewed in the vertical direction. In this example, these members extend in directions perpendicular to each other as viewed in the vertical direction.

In the present embodiment, the holding unit 1 includes four posts 11. In this example, the four posts 11 are arranged to cause lines connecting the posts 11 to define a rectangle as viewed in the vertical direction.

Two adjacent posts 11 of the four posts 11 are defined as a first post set 11A, and the other two adjacent posts 11 are defined as a second post set 11B. The two posts 11 of the first post set 11A are connected by a post connector 13. The two posts 11 of the second post set 11B are connected by another post connector 13. In this example, each post connector 13 extends in the horizontal direction. In the illustrated example, each post connector 13 extends in the same direction in which the crossbar connector 122 extends.

The first post set 11A and the second post set 11B are connected by the multiple crossbars 121. This connection forms the main framework of the holding unit 1.

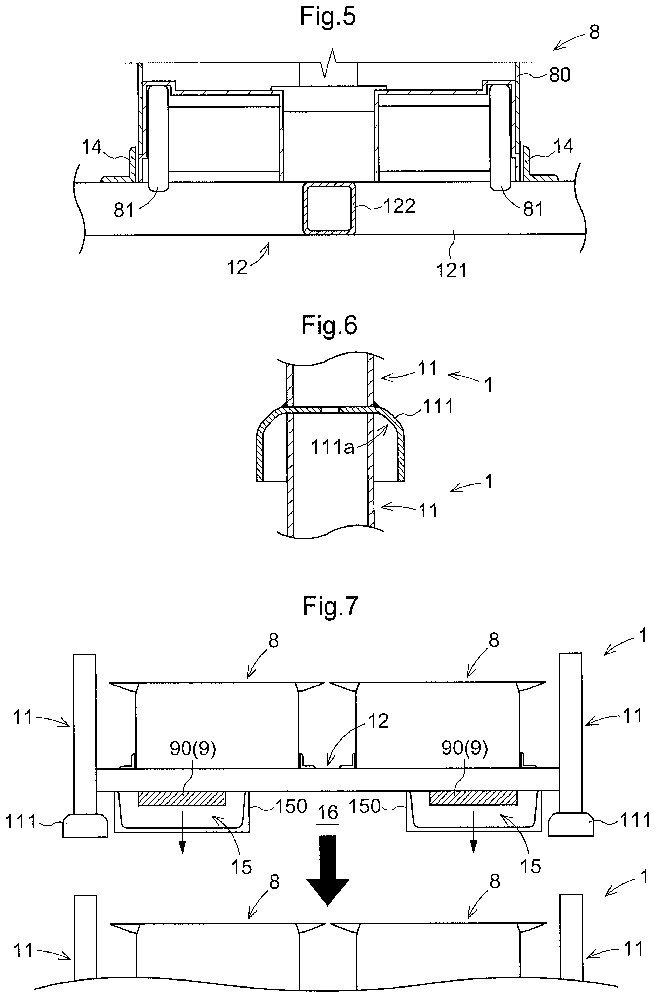

As shown in FIG. 5, the mount 12 supports the body 80 from below with the wheels 81 lifted in an off-ground state. In the present embodiment, the body 80 of the transport vehicle 8 is supported by multiple crossbars 121 from below. A part of the bottom of the body 80 comes in contact with the crossbars 121 from above and is supported by the crossbars 121. The part of the bottom of the body 80 unsupported by the crossbars 121 (unsupported part) is lifted off the ground. The wheels 81 in the transport vehicle 8 are arranged on the unsupported part. With the body 80 of the transport vehicle 8 supported by the mount 12, the wheels 81 arranged on the unsupported part are thus lifted off the ground. This structure avoids rolling of the wheels 81 on the mount 12. This allows the transport vehicle 8 to be held stably.

In the present embodiment, the mount 12 includes opposite walls 14 to closely face side surfaces of the body 80 of the transport vehicle 8 placed on the mount 12. This allows the transport vehicle 8 placed on the mount 12 to be positioned. The opposite walls 14 may be in contact with the body 80 of the transport vehicle 8. For example, guide rollers (not shown) installed on the side surfaces of the transport vehicle 8 may be in contact with the opposite walls 14. The guide rollers rotate about their vertical axes and guide the transport vehicle 8 in a traveling direction.

In the present embodiment, the transport vehicle 8 placed on the mount 12 is held between a pair of opposite walls 14. In this example, the opposite walls 14 are elongated members with an L-shaped cross section and extend in a direction intersecting with (specifically, perpendicular to) the crossbars 121 as viewed in the vertical direction. In the present embodiment, each pair of opposite walls 14 can position two transport vehicles 8 in a direction in which the opposite walls 14 extend (refer to FIG. 3).

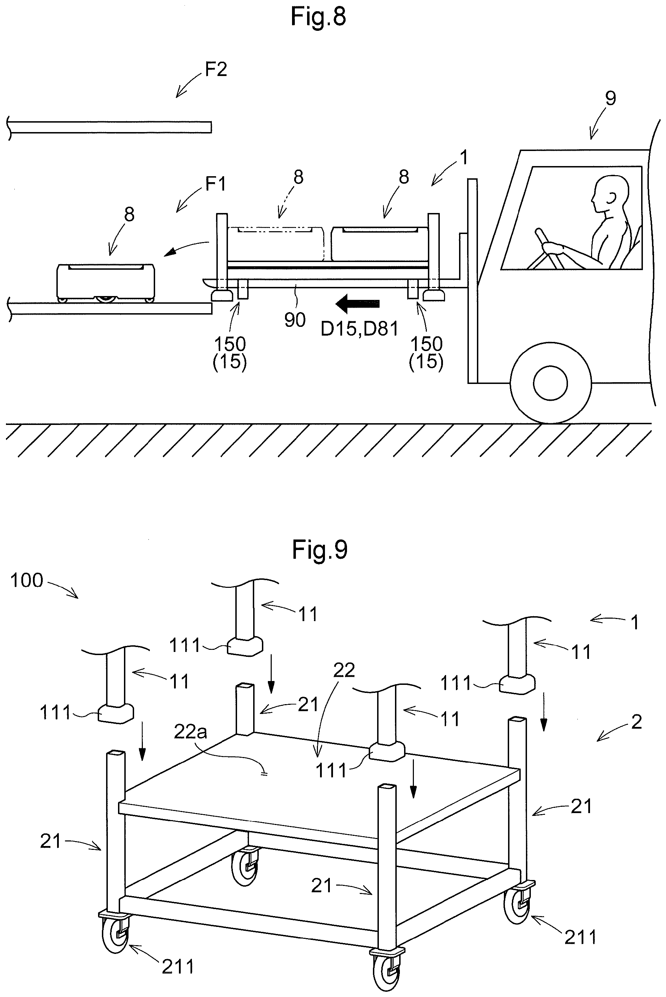

In the present embodiment, the opposite walls 14 extend in a rolling direction D81 (also refer to FIG. 8) in which the wheels 81 in the transport vehicle 8 placed on the mount 12 roll. In other words, the opposite walls 14 extend in the direction perpendicular to the rotation axes of the wheels 81 as viewed in the vertical direction. This structure allows a transport vehicle 8 to be moved easily along the opposite walls 14 when the transport vehicle 8 is placed onto the mount 12 or the transport vehicle 8 is removed from the mount 12.

As described above with reference to FIG. 4, the multiple holding units 1 are stackable in the vertical direction. The multiple holding units 1 can be stacked and disassembled as appropriate. For example, when a relatively large number of transport vehicles 8 are to be held, the multiple holding units 1 can be stacked to increase the total number of transport vehicles 8 that can be held by the holding device 100 without increasing the space occupied by the holding device 100 as viewed in the vertical direction. In contrast, when a relatively small number of transport vehicles 8 are to be held, the multiple stacked holding units 1 may be disassembled.

Each post 11 of a first holding unit 1 is vertically attachable to and detachable from the corresponding post 11 of a second holding unit 1. Multiple holding units 1 are stacked by connecting each post 11 of the first holding unit 1 to the corresponding post 11 of the second holding unit 1. Multiple stacked holding units 1 are disassembled by disconnecting each post 11 of the first holding unit 1 from the corresponding post 11 of the second holding unit 1.

In the present embodiment, as shown in FIG. 6, each post 11 of the first holding unit 1 includes an engagement portion 111 on its lower end to engage with the upper end of the post 11 of the second holding unit 1 connected to the post 11 of the first holding unit 1 from below.

In the present embodiment, the engagement portion 111 covers the post 11 of the second holding unit 1 with the engagement portion 111 engaged with the post 11. In this example, the engagement portion 111 is in the form of a bottomless container. The post 11 of the second holding unit 1 is disposed inside the engagement portion 111 in the form of a container. When the holding unit 1 is disposed on a floor surface independently, the engagement portion 111 in the form of a container is in contact with the floor surface, allowing stable self-standing.

In the present embodiment, connection of the post 11 of the first holding unit 1 to the corresponding post 11 of the second holding unit 1 refers to the upper end of the corresponding post 11 of the second holding unit 1 coming in contact with the engagement portion 111 in the post 11 of the first holding unit 1 from below. The upper end of the connection target post 11 is covered with the engagement portion 111. The connection target post 11 is thus positioned horizontally relative to the post 11 of the first holding unit 1 disposed above. Each of the N (four in this example) posts 11 is positioned in this manner, allowing the stacked holding units 1 to remain stably connected without being displaced from each other.

In the present embodiment, the engagement portion 111 includes a guide 111a that guides the upper end of another post 11 approaching the engagement portion 111 from below to a predetermined engagement position. The guide 111a is on the inner peripheral surface of the engagement portion 111 in the form of a container. The guide 111a is tapered upward.

Multiple holding units 1 are stacked by placing an upper holding unit 1 closer to a lower holding unit 1 from above (refer to FIG. 7). In this case, the lower holding unit 1 approaches the upper holding unit 1 relatively from below. The upper end of a post 11 of the lower holding unit 1 relatively approaches the corresponding post 11 of the upper holding unit 1 and is guided horizontally by the guide 111a. The upper end of the post 11 of the upper holding unit 1 is thus guided to the engagement position described above. The engagement position refers to the position of the lower post 11 with respect to the upper post 11 at which the post 11 of the lower holding unit 1 is aligned with the post 11 of the upper holding unit 1 in the vertical direction.

In the present embodiment, as shown in FIG. 7, the holding unit 1 is transported by a transporter 9 including a fork 90. The transporter 9 may be, for example, a forklift.

The area below the mount 12 and between the pair of adjacent posts 11 is defined as a fork entry space 16 in which the fork 90 is placed to transport the holding unit 1.

In the present embodiment, the fork entry space 16 has insertion openings 15 that receive the fork 90. This allows the holding unit 1 to be transported as appropriate by the transporter 9 with the fork 90. In this example, the insertion openings 15 for the fork 90 are defined by frames 150 protruding downward from the mount 12. A pair of frames 150 are arranged below the mount 12. The fork 90 is placed into each of the pair of frames 150 for the transporter 9 to lift the holding unit 1.

The transporter 9 lifts the holding unit 1 and placing the holding unit 1 closer to the lower holding unit 1 for stacking. The stacking operation in which the corresponding posts 11 are placed closer together in the vertical direction involves an experienced operator operating the transporter 9. However, as described above, the engagement portion 111 horizontally wider than the body (shaft) of the post 11 guides the lower post 11, thus facilitating the stacking operation.

FIG. 8 shows feeding a transport vehicle 8 held by a holding unit 1 to a floor in the article transport facility FC. The holding unit 1 is transported to the floor using, for example, the transporter 9.

In the article transport facility FC in the present embodiment, the first floor F1 is disposed upwardly apart from the floor surface of the facility. The second floor F2 is disposed upward apart from the first floor F1. To feed a transport vehicle 8 to the first floor F1 in the article transport facility FC, the transport vehicle 8 is to be lifted above the floor surface.

The same applies to feeding of the transport vehicle 8 to the second floor F2.

As described above, the holding unit 1 can be transported by the transporter 9 with the fork 90. The transporter 9 can thus transport the transport vehicle 8 held on the holding unit 1 to a position adjacent to the first floor F1.

In the present embodiment, the insertion openings 15 in the holding unit 1 have an opening direction D15 aligned with the rolling direction D81 of the wheels 81 (refer to FIG. 5) in the transport vehicle 8 placed on the mount 12. This allows a direction in which the transporter 9 transports the holding unit 1 to match a direction in which the holding unit 1 feeds the transport vehicle 8 to the first floor F1. This facilitates feeding of the transport vehicle 8 to the first floor F1. The same effects are produced when the transport vehicle 8 is retrieved from the first floor F1, facilitating retrieval of the transport vehicle 8 from the first floor F1.

In the present embodiment, as shown in FIG. 9, the holding device 100 includes a support unit 2 that supports the holding unit 1 from below. The support unit 2 can support a single holding unit 1 or multiple stacked holding units 1.

In the present embodiment, the support unit 2 includes N support posts 21 (N is an integer greater than or equal to 3). In other words, the support unit 2 includes the same number of support posts 21 as the posts 11 of the holding unit 1. In this example, the support unit 2 thus includes four support posts 21.

In the present embodiment, the support unit 2 includes a connection table 22 connecting the N support posts 21 to one another and having a flat upper surface 22a. The N support posts 21 connected by the single connection table 22 are integrated.

Each support post 21 of the support unit 2 is vertically attachable to and detachable from the corresponding post 11 of the holding unit 1 to be supported. Each support post 21 of the support unit 2 is connected to the corresponding post 11 of the support target holding unit 1 to support the holding unit 1 on the support unit 2. Each support post 21 of the support unit 2 is disconnected from the corresponding post 11 of the support target holding unit 1 to release the support unit 2 from supporting the holding unit 1.

The support posts 21 of the support unit 2 and the posts 11 of the holding unit 1 are connected in the same manner as the connection described above between the posts 11 of different holding units 1. More specifically, the upper end of the support post 21 of the support unit 2 engages with the engagement portion 111 at the lower end of the post 11 of the holding unit 1 to connect the support post 21 and the post 11. The upper end of the support post 21 is guided horizontally by the engagement portion 111 on the post 11 to the engagement position.

In the present embodiment, a caster wheel 211 is installed on the lower end of each of the N support posts 21 of the support unit 2. This allows one or more holding units 1 supported on the support unit 2 to be moved manually without using the transporter 9. However, the caster wheel 211 may not be installed on the lower end of each of the N support posts 21. The caster wheel 211 may be installed at any position at which the caster wheel 211 can support the main components of the support unit 2 from below.

As described above, the holding device 100 can be used to move multiple transport vehicles 8 collectively between different facilities or different departments that use the transport vehicles 8. The use of the support unit 2 allows the movement to be easily performed manually. The transport vehicles 8 are transported between different facilities using, for example, a truck. The support unit 2 is used to move the transport vehicles 8 to the truck. The transport vehicles 8 held on the holding unit 1 are loaded onto the truck.

When the transport vehicles 8 are transported as cargo by truck, the transportation may be subjected to vibration. The holding unit 1 may thus hold the transport vehicles 8 firmly.

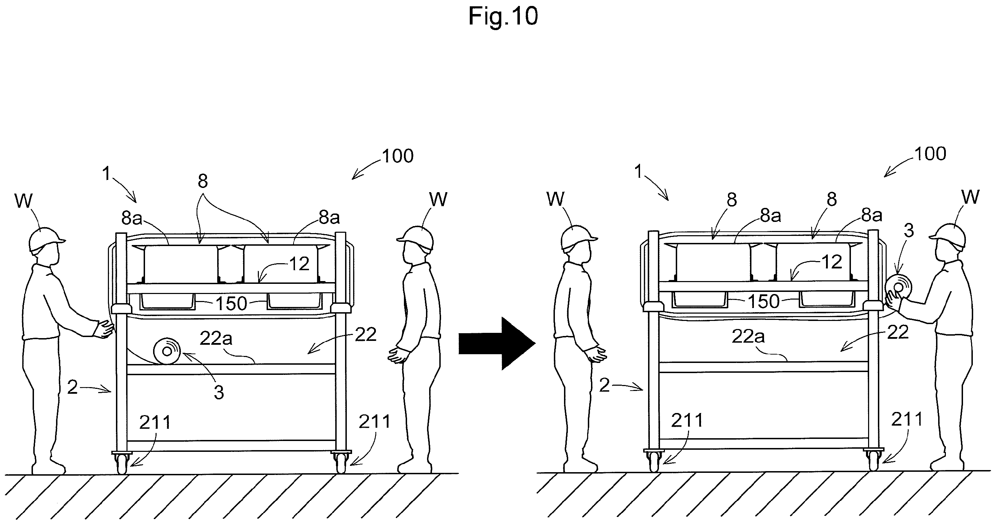

In the present embodiment, as shown in FIG. 10, the upper surface 22a of the connection table 22 in the support unit 2 is a rolling area for rolling a holding sheet 3 in the form of a roll during a sheet winding operation for winding the holding sheet 3 to cover the lower surface of the mount 12 and the upper surfaces of the multiple transport vehicles 8 arranged on the mount 12 to secure the multiple transport vehicles 8 to the mount 12 in the holding unit 1. More specifically, the use of the holding sheet 3 to secure the multiple transport vehicles 8 to the holding unit 1 allows the holding unit 1 to hold the transport vehicles 8 firmly. This reduces the likelihood of the transport vehicles 8 falling off the holding unit 1 due to vibration during the transportation when, for example, the transport vehicles 8 are transported by truck. The holding sheet 3 may be used to secure a single transport vehicle 8 to the holding unit 1.

The holding unit 1 may have a certain size to hold multiple transport vehicles 8. In this case, multiple operators W can more efficiently perform, rather than a single operator W, the sheet winding operation for winding the holding sheet to cover the lower surface of the mount 12 in the holding unit 1 and the upper surfaces of the multiple transport vehicles 8 arranged on the mount 12.

In the present embodiment, the connection table 22 in the support unit 2 and the mount 12 in the holding unit 1 have equivalent dimensions as viewed in the vertical direction. The multiple operators W are positioned on opposite sides of the mount 12 in the holding unit 1. The operators W positioned on opposite sides of the mount 12 repeatedly transfer the holding sheet 3 in the form of a roll between them by rolling the holding sheet 3 on the upper surface 22a (rolling area) of the connection table 22 in the support unit 2. In this manner, the multiple operators W can collaboratively perform the sheet winding operation efficiently.

Other embodiments will now be described.
(1) In the above embodiment, the opposite walls 14 on the mount 12 in the holding unit 1 are elongated members. However, the structure is not limited to this example. The opposite walls 14 may be block members locally arranged on the mount 12.
(2) In the above embodiment, the frames 150 defining the insertion openings 15 for the fork 90 are installed below the mount 12 in the holding unit 1. However, the structure is not limited to this example. The frames 150 may not be installed.
(3) In the above embodiment, each post 11 of the first holding unit 1 includes the engagement portion 111 on its lower end to engage with the upper end of the post 11 of the second holding unit 1 connected to the post 11 of the first holding unit 1 from below. However, the structure is not limited to this example. The engagement portion 111 may be disposed on the upper end of the post 11. In this case, the engagement portion 111 disposed on the upper end of the post 11 engages with the lower end of the post 11 of the second holding unit 1 connected to the post 11 of the first holding unit 1 from above.
(4) In the above embodiment, the holding device 100 includes the support unit 2. However, the structure is not limited to this example. The holding device 100 may not include the support unit 2.
(5) The structure described in each of the above embodiments may be combined with any other structures described in the other embodiments unless any contradiction arises. For other structures as well, the embodiments described herein are merely illustrative in all aspects. Thus, the embodiments described herein may be modified variously as appropriate without departing from the spirit and scope of the disclosure.

An overview of the present embodiment is provided below.

In one aspect, a holding device collectively holds a plurality of transport vehicles each including a body and a wheel mounted on the body. The holding device includes a plurality of holding units that hold the plurality of transport vehicles. The plurality of holding units include a first holding unit and a second holding unit. The plurality of holding units are stackable vertically. Each of the plurality of holding units includes a mount on which the plurality of transport vehicles are arranged, and N posts attached to the mount and protruding at least downward from the mount, where N is an integer greater than or equal to 3. The mount supports the body from below with the wheel lifted in an off-ground state. Each of the N posts of the first holding unit is vertically attachable to and detachable from a corresponding post of the second holding unit. The plurality of holding units are stacked by connecting each of the N posts of the first holding unit to the corresponding post of the second holding unit. The plurality of stacked holding units are disassembled by disconnecting each of the N posts of the first holding unit from the corresponding post of the second holding unit.

This structure allows a single holding unit to hold multiple transport vehicles. A holding unit can be stacked on another holding unit to increase the number of transport vehicles that can be held. Multiple stacked holding units can be disassembled to reduce the number of transport vehicles that can be held. The holding unit holds a transport vehicle on the mount. The mount supports the body of the transport vehicle from below with the wheel in the transport vehicle lifted in an off-ground state. This structure avoids rolling of the wheel on the mount. This allows the transport vehicle to be held stably. As described above, this structure allows idle transport vehicles to be easily stored in response to fluctuations in the number of active transport vehicles and the stored transport vehicles to be held securely. This structure can also hold multiple transport vehicles on each of the stackable holding units securely, thus allowing the holding device to be suitably used when a large number of transport vehicles are transported.

In the holding device, the mount may include opposite walls to face side surfaces of the body of each of the plurality of transport vehicles arranged on the mount.

In this structure, the opposite walls can restrain the transport vehicle placed on the mount from moving. This allows the transport vehicle to be held more stably.

In the holding device, the opposite walls may extend in a rolling direction in which the wheel in each of the plurality of transport vehicles arranged on the mount rolls.

This structure allows a transport vehicle to be moved easily along the opposite walls when the transport vehicle is placed onto the mount or the transport vehicle is removed from the mount. This facilitates placing a transport vehicle into and removing the transport vehicle from the holding device.

In the holding device, each of the plurality of holding units may be transported by a transporter including a fork. The holding device may have a fork entry space in which the fork is placed to transport the holding unit. The fork entry space may be an area below the mount and between a pair of adjacent posts among the N posts.

This structure facilitates collective transportation of multiple transport vehicles using the transporter with the fork.

In the holding device, the fork entry space may have an insertion opening to receive the fork. The insertion opening may have an opening direction aligned with a rolling direction of the wheel in each of the plurality of transport vehicles arranged on the mount.

This structure facilitates, with the transporter including the fork, transportation of the holding unit to a position adjacent to a travel floor for the transport vehicles to feed the transport vehicles to the travel floor and retrieve the transport vehicles from the travel floor.

In the holding device, each of the N posts of the first holding unit may include an engagement portion on a lower end of the post to engage with an upper end of the post of the second holding unit connected to the post of the first holding unit from below. The engagement portion may include a guide that guides the upper end of the post of the second holding unit approaching the engagement portion from below to a predetermined engagement position.

This structure facilitates appropriate connection between the posts, thus allowing the holding units to be stacked easily.

The holding device may further include a support unit that supports at least one of the plurality of holding units from below. The support unit may include N support posts. Each of the N support posts of the support unit may be vertically attachable to and detachable from a corresponding post of a holding unit to be supported among the plurality of holding units. Each of the N support posts of the support unit may be connected to the corresponding post of the holding unit to support the holding unit on the support unit. Each of the N support posts of the support unit may be disconnected from the corresponding post of the holding unit to release the support unit from supporting the holding unit.

This structure allows one or more holding units to be supported as appropriate by the support unit.

In the holding device, the support unit may include a connection table connecting the N support posts to one another and having a flat upper surface. The upper surface of the connection table may be a rolling area for rolling a holding sheet in a form of a roll during a sheet winding operation for winding the holding sheet to cover a lower surface of the mount and upper surfaces of the plurality of transport vehicles arranged on the mount to secure the plurality of transport vehicles to the mount.

The holding unit may have a certain size to hold multiple transport vehicles. In this case, multiple operators can more efficiently perform rather than a single operator, the sheet winding operation for winding the holding sheet to cover the lower surface of the mount and the upper surfaces of the multiple transport vehicles arranged on the mount. In this structure, for example, the multiple operators may be positioned on opposite sides of the mount in the holding unit. The operators positioned on opposite sides of the mount can repeatedly transfer the holding sheet in the form of a roll between them by rolling the holding sheet on the rolling area of the connection table to efficiently perform the sheet winding operation.

### REFERENCE SIGNS LIST

- 100: holding device
- 1: holding unit
- 11: post
- 111: engagement portion
- 111a: guide
- 12: mount
- 14: opposite wall
- 15: insertion opening
- 16: fork entry space
- 2: support unit
- 21: support post
- 22: connection table
- 22a: upper surface
- 3: holding sheet
- 8: transport vehicle
- 80: body
- 81: wheel
- 9: transporter
- 90: fork
- D15: opening direction
- D81: rolling direction

## Claims

1. A holding device for collectively holding a plurality of transport vehicles each including a body and a wheel mounted on the body, the holding device comprising:
a plurality of holding units configured to hold the plurality of transport vehicles, the plurality of holding units including a first holding unit and a second holding unit,
the plurality of holding units being stackable vertically,
each of the plurality of holding units including
a mount on which the plurality of transport vehicles are arranged, and
N posts attached to the mount and protruding at least downward from the mount, where N is an integer greater than or equal to 3,
the mount being configured to support the body from below with the wheel lifted in an off-ground state,
each of the N posts of the first holding unit being vertically attachable to and detachable from a corresponding post of the N posts of the second holding unit,
the plurality of holding units being configured to be stacked by connecting each of the N posts of the first holding unit to the corresponding post of the N posts of the second holding unit,
the plurality of stacked holding units being configured to be disassembled by disconnecting each of the N posts of the first holding unit from the corresponding post of the N posts of the second holding unit.

2. The holding device according to claim 1, wherein
the mount includes opposite walls to face side surfaces of the body of each of the plurality of transport vehicles arranged on the mount.

3. The holding device according to claim 2, wherein
the opposite walls extend in a rolling direction in which the wheel in each of the plurality of transport vehicles arranged on the mount rolls.

4. The holding device according to claim 1, wherein
each of the plurality of holding units is transported by a transporter including a fork, and
the holding device has a fork entry space in which the fork is placed to transport the holding unit, the fork entry space being an area below the mount and between a pair of adjacent posts among the N posts.

5. The holding device according to claim 4, wherein
the fork entry space has an insertion opening to receive the fork, and
the insertion opening has an opening direction aligned with a rolling direction of the wheel in each of the plurality of transport vehicles arranged on the mount.

6. The holding device according to any one of claims 1 to 5, wherein
each of the N posts of the first holding unit includes an engagement portion on a lower end of the post to engage with an upper end of the post of the second holding unit connected to the post of the first holding unit from below, and
the engagement portion includes a guide configured to guide the upper end of the post of the second holding unit approaching the engagement portion from below to a predetermined engagement position.

7. The holding device according to any one of claims 1 to 5, further comprising:
a support unit configured to support at least one of the plurality of holding units from below,
wherein the support unit includes N support posts,
each of the N support posts of the support unit is vertically attachable to and detachable from a corresponding post of a holding unit to be supported among the plurality of holding units,
each of the N support posts of the support unit is connected to the corresponding post of the holding unit to support the holding unit on the support unit, and
each of the N support posts of the support unit is disconnected from the corresponding post of the holding unit to release the support unit from supporting the holding unit.

8. The holding device according to claim 7, wherein
the support unit includes a connection table connecting the N support posts to one another and having a flat upper surface, and
the upper surface of the connection table is a rolling area for rolling a holding sheet in a form of a roll during a sheet winding operation for winding the holding sheet to cover a lower surface of the mount and upper surfaces of the plurality of transport vehicles arranged on the mount to secure the plurality of transport vehicles to the mount.
